# EUROPÄISCHE PATENTSCHRIFT

(11) **EP 0 658 611 B1**
(45) Veröffentlichungstag und Bekanntmachung des Hinweises auf die Patenterteilung: **08.09.1999**
(21) Anmeldenummer: 94117572.1
(22) Anmeldetag: 08.11.1994
(51) Int. Cl.: C09K 3/10, F16F 9/36, F16F 9/32

(54) **Spritzgegossene Führungs- und Dichtelemente an Sinterteilen für Stossdämpfer**
Injection molded guiding and sealing elements on sintered parts for a shock absorber
Eléments de guidage et d'étanchéité moulés par injection sur pièces frittées pour amortisseur de chocs

(30) Priorität: 18.12.1993 DE 4343428
(43) Veröffentlichungstag der Anmeldung: 21.06.1995
(73) Patentinhaber: GKN Sinter Metals Holding GmbH, 42477 Radevormwald (DE)
(72) Erfinder: Casellas, Antonio, D-53721 Siegburg (DE); May, Ewald, Dipl.-Ing., D-53175 Bonn (DE)
(74) Vertreter: Maxton, Alfred, Dipl.-Ing.

(56) Entgegenhaltungen:
- EP-A- 0 218 274
- DE-U- 8 120 842
- PATENT ABSTRACTS OF JAPAN vol. 5 no. 180 (C-079) ,19.November 1981 & JP-A-56 103268 (NIPPON VALQUA IND) 18.August 1981,
- PATENT ABSTRACTS OF JAPAN vol. 18 no. 40 (C-1155) ,21.Januar 1994 & JP-A-05 262976 (NTN CORP.) 12.Oktober 1993,
- PATENT ABSTRACTS OF JAPAN vol. 15 no. 236 (M-1126) ,20.Juni 1991 & JP-A-03 074681 (NIPPON SEIKO) 29.März 1991,
- PATENT ABSTRACTS OF JAPAN vol. 9 no. 301 (C-316) ,28.November 1985 & JP-A-60 141743 (UCHIYAMA KOGYO) 26.Juli 1985,
- PATENT ABSTRACTS OF JAPAN vol. 10 no. 120 (C-343) ,6.Mai 1986 & JP-A-60 245659 (IIGURU KOGYO) 5.Dezember 1985,
- PATENT ABSTRACTS OF JAPAN vol. 11 no. 60 (C-405) ,24.Februar 1987 & JP-A-61 221254 (NOK CORP.) 1.Oktober 1986,
- PATENT ABSTRACTS OF JAPAN vol. 11 no. 192 (C-429) ,19.Juni 1987 & JP-A-62 015280 (NIPPON JOHN KUREEN) 23.Januar 1987,
- PATENT ABSTRACTS OF JAPAN vol. 8 no. 143 (M-306) ,4.Juli 1984 & JP-A-59 040066 (DAIKIN KOGYO) 5.März 1984,
- PATENT ABSTRACTS OF JAPAN vol. 10 no. 257 (M-513) [2313] ,3.September 1986 & JP-A-61 082072 (NOK CORP.)
- MACHINE DESIGN, Bd. 66,Nr. 11, 6.Juni 1994 Seiten 84-92, WORM, A.T. 'Fluoroelastomers DRIVING TOWARD THE FUTURE'
- PATENT ABSTRACTS OF JAPAN vol. 18 no. 236 (C-1196) ,6.Mai 1994 & JP-A-06 025499 (NOK CORP.) 1.Februar 1994,

## Beschreibung

Die Erfindung betrifft Sintermetallkörper für Stoßdämpfer, nämlich eine Kolbenstangenführung und ein auf einer längsaxial beweglichen Kolbenstange fest montierbarer in einem Zylinderrohr bewegbarer und gegen die Wand des Zylinderrohres abgedichteter Kolben, die an ihren, die Führungs- und Dichtfunktion bewirkenden Zonen mit Führungs-, Dicht- und Gleitelementen in Form von aus organischen Polymeren bestehenden oder organische Polymere enthaltenden Belägen ausgerüstet sind.

Ein Stoßdämpfer besteht im wesentlichen aus einem Zylinderrohr, einem in dem Zylinderrohr verschiebbar gelagerten Kolben, der zwei fluidgefüllte Arbeitsräume dichtend voneinander trennt und der auf einer im Zylinderrohr und in einer Führung längsaxial bewegbaren Kolbenstange endseitig fest montiert ist. Kolben und Führung sind heute in der überwiegenden Zahl der Fälle Sintermetallteile. Die Kolbenstangenführung verschließt den Arbeitsraum des inneren Zylinderrohres an einem Ende druck- und fluiddicht und hat eine zentrische, mit Aufnahmen für Dichtungen ausgestattete Bohrung, die der Führung der im Stoßdämpfer längsaxial bewegbaren Kolbenstange dient. Der im Arbeitsraum des Stoßdämpfers am Ende der Kolbenstange befindliche Kolben weist Durchströmventile für den beim Arbeitsvorgang im Stoßdämpfer stattfindenden Fluidfluß von der Druck- in die Zugseite und umgekehrt, sowie eine an seinem Außenmantel ringförmig umlaufende Dichtung auf, die einerseits an der Innenwand des Arbeitsrohres gut gleiten aber auch die auf unterschiedlichen Druckniveaus befindlichen Fluidfüllungen der Druckseite und der Zugseite gegeneinander abdichten muß. Die unterschiedlichen Funktionen der beiden genannten Sintermetallteile, Kolbenstangenführung und Stoßdämpferkolben, werden im folgenden etwas eingehender beschrieben. Die Kolbenstangenführung hat eine präzise zentrische Führung der Kolbenstange zu bewirken, muß aber nicht in erster Linie eine Dichtwirkung entfalten, da zusätzlich zu dieser Führung noch eine hochwirksame Dichtung im oder neben dem Führungskörper vorhanden ist. Sie muß jedoch Gleiteigenschaften aufweisen, um die hochpräzise und mit sehr geringer Rauhtiefe gearbeitete Kolbenstange sicher und beschädigungsfrei zu führen. Sie ist deshalb mit einem gleitfähigen Lagermetall ausgekleidet oder enthält z. B. eine DU-Buchse, die als Arbeitsfläche einen Verbundwerkstoff aus Polytetrafluorethylen und Blei aufweist. Der Stoßdämpferkolben hingegen muß die fluidgefüllte Druckseite von der fluidgefüllten Zugseite des Stoßdämpfers trennen und dabei Bewegungen im ihn umgebenden Zylinderrohr ausführen, d. h. er muß auf seiner radial außenliegenden, im wesentlichen zylindermantelförmigen Begrenzungsfläche eine gut gleitende und hinreichend wirksame, druckbeständige Dichtung haben. Derartige Dichtungen bestehen heute aus in Ringnuten auf der äußeren Mantelfläche des Stoßdämpferkolbens eingelegten, eingeschrumpften oder aufgewikkelten Ringen, Folien oder Bändern. Besonders gebräuchlich sind hier O-Ringe aus Gummiwerkstoffen wie Nitrilkautschuk (Perbunan ^{R}) oder Fluorelastomeren (Viton ^{R}) oder Schrumpffolien und Einlege-, bzw. Wickelbänder aus fluorierten Kohlenwasserstoffen wie z. B. Polytetrafluorethylen (PTFE), die bei guter Dichtwirkung hinreichende Gleitwirkung entfalten und ausreichend temperaturstabil sind (siehe z. B. Reimpell/ Stoll, Fahrwerktechnik: Stoß- und Schwingungsdämpfer, Vogel Buchverlag Würzburg, 1989, Seite 30). Polytetrafluorethylen wird auch in Kolbenstangenführungen verwendet, wie aus dem deutschen Gebrauchsmuster G 81 20 842.1 hervorgeht. Dort ist eine Kolbenstangenführung aus Sintermetall, die auf der Bohrungsfläche eine Schicht aus PTFE aufweist, beschrieben. Über das Auftragsverfahren für das PTFE ist dort jedoch nichts ausgesagt. Jedenfalls scheidet dafür das Spritzgießen aus, da Polytetrafluorethylen nicht soweit plastisch verformbar ist, daß es spritzgegossen werden kann.

Aus der JP-A-56 103 268 ist eine Flanschdichtung aus einem Copolymer von Tetrafluorethylen mit Perfluoralkylvinylether bekannt. Aus der JP-A-52 62 976 ist ein Öldichtring bekannt, der aus einer Polyetherketone-Verbindung besteht.

Ein wesentlicher Nachteil aller die vorbeschriebenen Dicht-, Gleit- und Führungselemente betreffenden Lösungen ist der vergleichsweise hohe Aufwand zu ihrer Herstellung und/oder Anbringung auf den Kolbenstangenführungen und den Stoßdämpferkolben. Es müssen präzise Aufnahme- und Verankerungselemente in die Kolben bzw. Führungen, in aller Regel durch materialabtragende Bearbeitungsvorgänge eingebracht werden. Die Dichtungsmaterialien sind vorgefertigte Halb- oder Fertigerzeugnisse wie O-Ringe, Folien oder Bänder, die nach speziellen Verfahren in angepaßten Größen hergestellt und in gesonderten Arbeitsvorgängen in die Aufnahmen für die Dichtungen eingelegt werden müssen. Dies alles vermehrt die Zahl der Arbeitsvorgänge und verursacht wegen der Vielzahl vorzuhaltender Teile erhebliche Dispositions- sowie Lagerkosten, so daß die Herstellung der genannten Teile vergleichsweise hohen Aufwand erfordert.

Aufgabe der dieser Anmeldung zugrundeliegenden Erfindung war es daher, Kolbenstangenführungen und Kolben für Stoßdämpfer zu schaffen, deren Grundkörper aus Sintermetall besteht und die ohne Verwendung vorgefertigter Bauteile wie Buchsen, Ringe, Schrumpffolien, Einlegeoder Wickelbänder durch ein hochleistungsfähiges, einstufiges, wenig aufwendiges Fertigungsverfahren maßhaltig aufgebrachte Dichtungs-, Führungs- und Gleitbeläge haben.

Die Aufgabe wird durch die kennzeichnenden Merkmale des Patentanspruchs 1, die hiermit in die Beschreibung eingeführt werden, gelöst. Die hierdurch ebenfalls in die Beschreibung eingeführten Merkmale der Unteransprüche enthalten Ausgestaltungen des Anspruchs 1.

Die Sintermetallteile, die an den dafür vorgesehenen Stellen mit einem Füller enthaltenden organischen Polymeren umspritzt werden sollen, weisen an diesen Stellen für die Aufnahme oder/und die Verankerung der Polymermasse geeignete Ausnehmungen und Strukturen wie beispielsweise unterbrochene oder nicht unterbrochene Ring-, Längs-, schrägverlaufende oder gekreuzte Nuten oder Rippen oder Bohrungen bzw. Noppen auf, die vorteilhafterweise bei der Herstellung des Sinterkörpers ohne einen zusätzlichen Arbeitsgang mit eingepreßt werden, die aber, wo dies unumgänglich ist, auch durch materialabtragende Bearbeitungsverfahren in den Sinterkörper eingebracht werden können. Im Gegensatz zu bisherigen Aufnahmen von z.B. Dichtungs- und Führungsringen oder -Manschetten müssen die Aufnahme- und Verankerungselemente nicht präzise gearbeitet sein, da sie ohnehin von der organischen füllerhaltigen Polymermasse um- oder ausgespritzt werden, von ihm jedenfalls in fester Verankerung umhüllt sind und damit von einer rauhen Auflage oder Führung nicht verschlissen werden können.

Die entsprechend vorbereiteten Sintermetallteile werden an den Zonen, die mit den Oberflächenelementen für die Aufnahme und die Verankerung der Polymermasse ausgerüstet sind, in an sich bekannter Weise auf Spritzgießmaschinen mit der füllerhaltigen Polymermasse umspritzt. Um dabei den größtmöglichen Nutzen zu erzielen, bedient man sich hier Mehrfach-, z.B. 10-fach-Preßformen und automatisch arbeitender Beschickungs- und Entnahmewerkzeuge. Für die meisten Anwendungen können die Teile gleichzeitig mit dem Vorgang des Spritzgießens auch kalibriert werden, so daß sie nach der Entnahme aus der Form und einer nachgeschalteten Temperung einbaufertig vorliegen. Nur für die Einhaltung höchster Toleranzen müssen die Teile gegebenenfalls mechanisch nachbearbeitet werden.

An die Gebrauchseigenschaften der organischen Polymere werden hohe Anforderungen gestellt. Sie müssen je nach Anwendungsfall Dauergebrauchstemperaturen von 120 bis 180 °C im Normalfall und in Sonderfällen bis 220 °C ohne funktionseinschränkende Verformungen oder Materialveränderungen widerstehen und dabei beständig gegenüber den Fluidfüllungen des Stoßdämpfers, im wesentlichen Mineralölen und das Alterungsverhalten und die Temperatur-Viskositätsabhängigkeit beeinflussenden Additiven wie z.B. Aminoleaten und Zinkdialkyldithiophosphat sein. Außerdem müssen sie nach Aufnahme einer vorgegebenen Menge eines Füllers noch spritzgießbar sein. Bevorzugte, für die vorbeschriebenen Anwendungen verwendete organische Polymere sind fluorhaltige Thermoplaste aus der Gruppe
- Copolymeres von Tetrafluorethylen mit Perfluoralkylvinylether (PFA),
- Copolymeres von Tetrafluorethylen mit perfluoriertem Propylen und Perfluoralkylvinylether (EPE),
- Copolymeres von Tetrafluorethylen mit Perfluorpropylen (FEP),
- Copolymeres von Tetrafluorethylen mit Ethylen (ETFE),
- Polychlortrifluorethylen (PCTFE),
- Copolymeres von Ethylen und Chlortrifluorethylen (ECTFE).

Ebenfalls geeignet sind molekulare Baugruppen aus aromatischen Kohlenwasserstoffen enthaltende Thermoplaste aus der Gruppe
- Polyaryletherketone (PEK),
- Polyaryletheretherketone (PEEK),
- Polyphenylensulfid (PPS),
- Polyarylensulfone (PSU),
- Polyethersulfone (PES),
- Poly(amid-imid) (PAI),
- Poly(ether-imid) (PEI),
- Poly(imid-sulfon) (PISO)
und Duroplaste auf Phenolharzbasis.

Als Polymerbestandteil der Spritzgießmasse können auch Mischungen der genannten Polymere verwendet werden. Es lassen sich so spezielle Eigenschaftsvarianten einstellen.

Von den angegebenen Thermoplasten haben sich Copolymere von PTFE mit Perfluoralkylvinylether als besonders geeignet erwiesen. Die organischen Polymere haben in der Regel allein noch nicht das für die beschriebenen Anwendungen notwendige Eigenschaftsprofil. In Abhängigkeit von der Sorte des Polymeren ist es deshalb erforderlich, bestimmte Eigenschaften wie die Gleitfähigkeit und Schmierwirkung, die Festigkeit gegen Kriechen unter Druck und Temperatur sowie die Dauerstandstemperaturfestigkeit zu verbessern. Dies geschieht, indem dem jeweiligen Polymeren ein mineralischer Füller zugesetzt wird, der neben einer ausreichenden thermischen Stabilität eine sehr gute Trockenschmierwirkung hat. Bevorzugte Stoffe dieser Art sind Graphit und Molybdändisulfid. Sie werden dem Polymeren in fein verteilter Form, vorzugsweise mit Korngrößen zwischen Feinstkorn und 80 µm zugesetzt und in sie eingemischt. Dies geschieht in Compoundiereinrichtungen wie z.B. Schneckenknetern oder Planetwalzenextrudern, in denen die Polymere mindestens teilweise geschmolzen, die Füllstoffe fein verteilt und eingearbeitet, sowie die compoundierte Masse beim Austritt aus der Maschine in ein für die weitere Verarbeitung geeignetes Granulat zerkleinert wird. Die zugesetzten Füllstoffmengen liegen zwischen 5 und 65 Volumenprozent, bezogen auf die füllstoffhaltige Mischung. Zusätzlich zu den durch die Compoundierung erreichten Verbesserungen wird, besonders durch einen Zusatz von Graphit, die Wärmeleitfähigkeit der Mischung verbessert, was sich positiv auf die Verarbeitbarkeit beim Spritzgießen und auf die Haltbarkeit im betrieblichen Einsatz auswirkt.

Die Erfindung wird im folgenden anhand eines Ausführungsbeispiels und von Figuren beispielhaft erläutert:

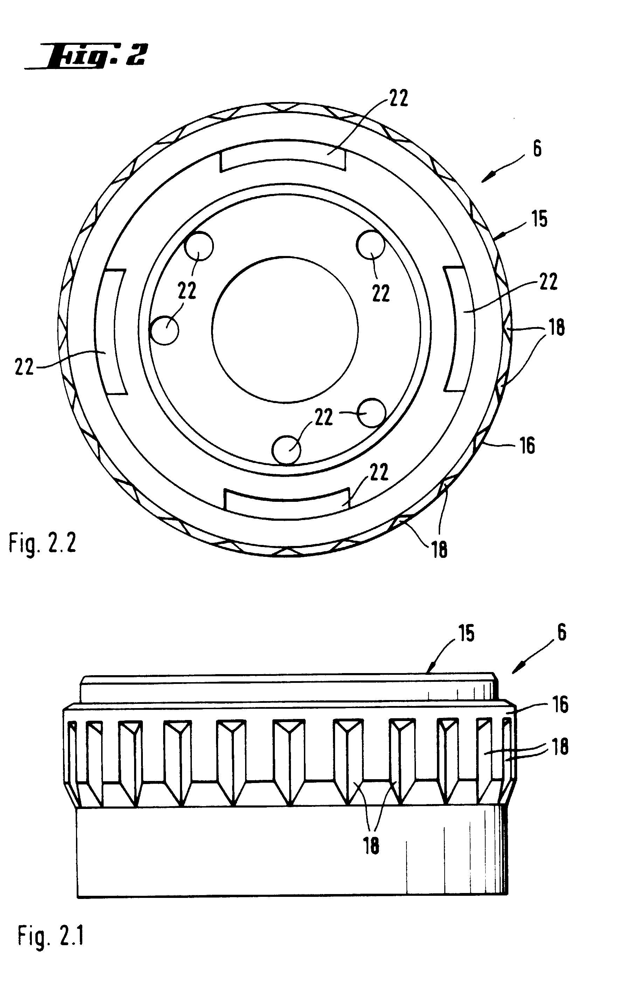

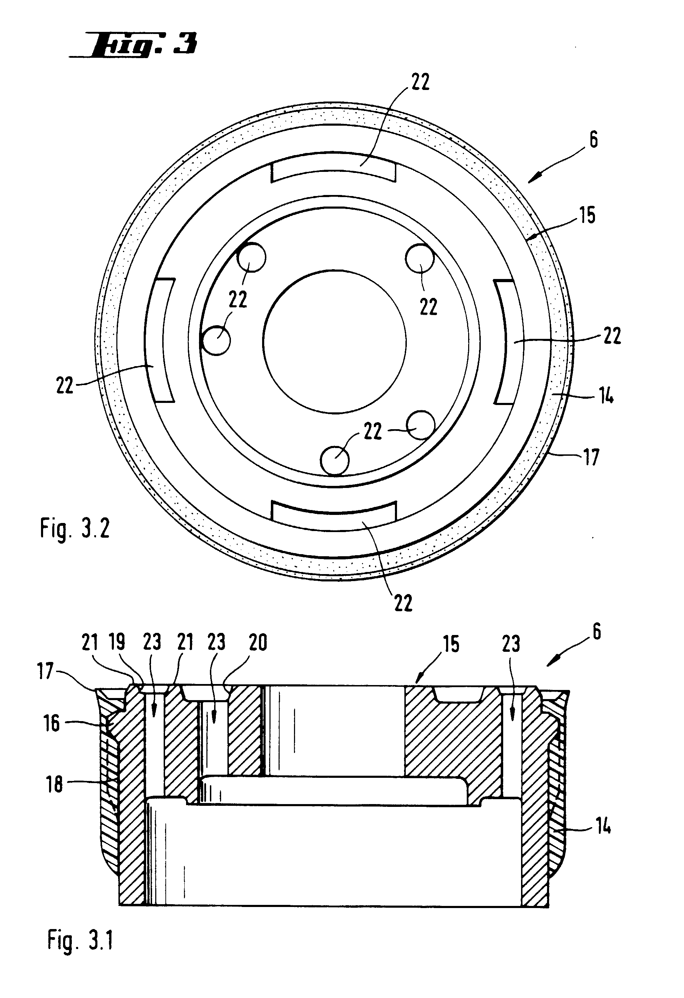

Durch ein sintermetallurgisches Verfahren wurden unter Anwendung einer Sintertemperatur von 1120 °C aus Eisenpulver mit Hinterschneidungen und Verankerungsnuten versehene Stoßdämpferkolben hergestellt. Sie hatten im Prinzip die Grundform des in Fig. 2 und 3 dargestellten Stoßdämpferkolbens. Nach dem Entölen bei 420 °C wurden die Kolben für das Umspritzen mit der Polymermasse in einer Temperierstation auf eine Temperatur von 250 °C gebracht. Die Einstellung einer der Spritzgießaufgabe angepaßten Formteiltemperatur ist wichtig, um ein fehlerfreies Umspritzen und das Anlegen der Masse an die für eine Verankerung vorgesehenen Oberflächenstrukturen zu ermöglichen und Fehler durch zu früh oder zu intensiv einsetzende Abkühlprozesse mit der Folge von z.B. der Ausbildung von Rissen an Nahtstellen oder Dichteinhomogenitäten zu vermeiden. Die temperierten Kolben wurden dann mittels eines Manipulators in die 4-fach-Spritzgußform einer Spritzgießmaschine vom Typ Arburg 270 CMD eingelegt, die zum Spritzgießen eines einen Graphitfüller enthaltenden Copolymers von PTFE mit einem Perfluoralkylvinylether vom Typ Hostaflon PFA 6515 vorbereitet worden war. Die Spritzgießmasse bestand zu 45 Volumenprozent aus einem Füller aus gemahlenem Elektrographit, Aschegehalt, maximal 600 ppm, Korngröße 80 % < 30 µm und 100 % < 60 µm und 55 Vol.-% Hostaflon PFA 6515. Die aus zwei Teilen bestehende, 4 Nester und einen Ringverteiler aufweisende Mehrfachform hatte als drittes Formteil den eingelegten Stoßdämpferkolben. Die Form war ebenfalls auf 250 °C temperiert. Die Temperatur des Zylinders der Maschine lag je nach Schmelzzone zwischen 370 und 430 °C. Zur Massenzuführung wurde eine kernprogressive Schnecke verwendet. Die produktberührten Teile der Spritzgießanordnung bestanden aus einer korrosionsfesten, hoch nickelhaltigen Legierung. Das Einspritzen geschah mit einer sehr geringen Fließgeschwindigkeit der graphithaltigen Fluorpolymermasse, um die auf das Polymer wirkenden Scherkräfte gering zu halten. Die Maschineneinstellung betrug dazu 30 % der maximal möglichen Spritzgeschwindigkeit. Nach der Beendigung des Spritz- und Haltevorgangs unter Druck wurden die Kolben aus der Form entnommen und nach einer verfahrensbedingten Zwischenabkühlung in einem Temperofen innerhalb von 72 Stunden linear nochmals bis auf 250 °C aufgeheizt. Dieser Vorgang diente dem Abbau von Spannungen in der spritzgegossenen Umhüllung und der Verfestigung der Verbindung zwischen dem Sintermetallbauteil und dem Fluorpolymeren.

Die mit so hergestellten Stoßdämpferkolben in Stoßdämpfern durchgeführten Lauf- und Belastungstests ergaben im Vergleich zu Stoßdämpferkolben mit herkömmlichen Dichtungseinrichtungen gleiche Standzeiten und Leistungsdaten.

Die Fig. 1 bis 7 geben die Erfindung in schematischer Darstellung beispielhaft wieder.

Es zeigen:
- Fig. 1,: einen Längsschnitt durch einen Stoßdämpfer,
- Fig. 2,: einen für das Spritzgießen vorbereiteten Grundkörper eines Stoßdämpferkolbens,
2.1 in einer Seitenansicht auf den zu umspritzenden Kolbenmantel (untere Darstellung) und
2.2 in einer Ansicht auf die untere Stirnseite (obere Darstellung),
- Fig. 3,: einen Stoßdämpferkolben mit spritzgegossener Dichtung,
3.1 im Querschnitt (untere Darstellung) und
3.2 in einer Ansicht auf die untere Stirnseite (obere Darstellung),
- Fig. 4, 5 und 6,: Querschnitte durch Kolbenstangenführungen unterschiedlicher Ausführung mit hälftig geteilten Ansichten. Links, in für das Spritzgießen vorbereiteter, rechts, in mit Polymermasse ausgespritzter Form.
- Fig. 7,: eine Ansicht auf die untere Seite einer Kolbenstangenführung gemäß Fig. 6.

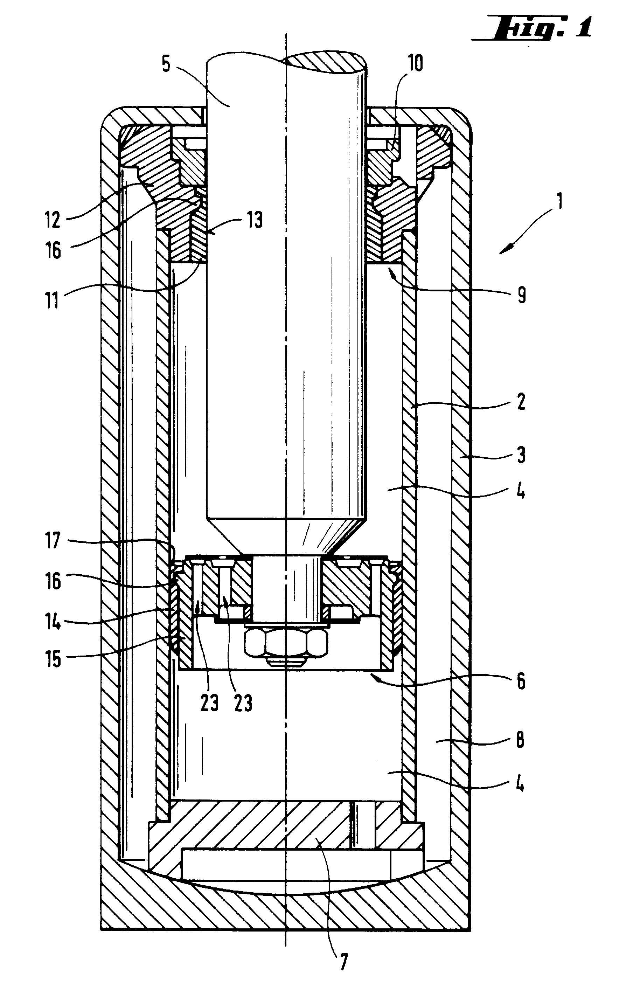

Der in Fig. 1 schematisch dargestellte Stoßdämpfer 1 besteht aus zwei oben und unten geschlossenen Zylinderrohren 2, 3. Das innere Zylinderrohr 2 schließt den mit einem Fluid gefüllten Arbeitsraum 4 ein, in dem ein auf einer Kolbenstange 5 endseitig befestigter Stoßdämpferkolben 6 angeordnet ist. Im unteren Teil des inneren Zylinderrohres befindet sich als Abschluß eine Ventilplatte 7, die ein Durchströmen des Fluids in den zwischen dem inneren 2 und dem äußeren Zylinderrohr 3 befindlichen Ausgleichsraum 8 und zurück ermöglicht. In Einrohrstoßdämpfern (nicht dargestellt) ist statt einer Ventilplatte 7 ein einen Gasraum abschließender Trennkolben an etwas höherer Stelle angeordnet. Die Kolbenstange 5 ist im oberen Teil des inneren Zylinderrohres 2 in einer Kolbenstangenführung 9 geführt, die zusammen mit der in ihr 9 befestigten Dichtung 10 den oberen Abschluß beider Zylinderrohre 2 und 3 bildet. Der Grundkörper 12 der Kolbenstangenführung 9 besteht aus Sintermetall. Die Gleitfläche 13 der Kolbenstangenführung 9 besteht jedoch aus einem die eigentliche Führung bewerkstelligenden, spritzgegossenen, hülsenförmigen Belag 11 mit guten Gleiteigenschaften aus einem füllerhaltigen organischen Polymeren. Aus dem gleichen oder einem anderen geeigneten füllerhaltigen organischen Polymeren nach der Erfindung besteht auch die ebenfalls spritzgegossene zylindermantelförmige Dichtung 14, die fest auf dem aus Sintermetall bestehenden Grundkörper 15 des Stoßdämpferkolbens 6 verankert ist. Die Verankerung des Dichtungsbelages auf dem Sintermetallgrundkörper 15 wird durch einen umlaufenden und mit der Dichtungsmasse umspritzten und überdeckten Ringsteg 16 verbessert. Einen entsprechenden Steg 16 weist auch der Sintermetallgrundkörper 12 der Kolbenstangenführung 9 auf. Zur Verbesserung der Dichtwirkung ist die Dichtung 14 des Stoßdämpferkolbens 6 mit einer Dichtlippe 17 versehen.

Die in Fig. 2 gezeigten Ansichten eines für das Spritzgießen vorbereiteten Grundkörpers 15 des Stoßdämpferkolbens 6 geben eine Seitenansicht auf die Zylindermantelfläche dieses Grundkörpers 15 (Fig. 2.1) und eine Sicht auf dessen 15 Unterseite wieder (Fig. 2.2). Alle abgebildeten Details dieses Grundkörpers 15 sind sintermetallurgisch und ohne spangebende Bearbeitungsschritte gefertigt. Zur besseren Verankerung der spritzgegossenen füllerhaltigen Polymermasse sind in die Mantelfläche des Grundkörpers 15 Nuten 18 eingepreßt und es ist ein umlaufender Steg 16 angepreßt. In Fig. 2.2 sind neben den Nuten 18 und dem umlaufenden Steg 16 Öffnungen von Fluiddurchtrittskanälen 22 zu sehen.

In der Schnittdarstellung eines mit der füllerhaltigen Polymermasse mantelseitig umspritzten Sintermetallgrundkörpers 15 eines Stoßdämpferkolbens 6 in Fig. 3.1 ist die durch Spritzgießen hergestellte und in den Nuten 18 (siehe auch Fig. 2.1) und an dem umlaufenden Steg 16 verankerte Dichtung 14, sowie die spritzgegossene Dichtlippe 17 zu sehen. Außerdem sind die äußere 19 und die innere 20 Ringnut, die die Ringnuten 19, 20 begrenzenden umlaufenden Dichtungsstege 21 und die Fluiddurchtrittskanäle 23 zu erkennen. In der Ansicht der Unterseite des Stoßdämpferkolbens 6 in Fig. 3.2 ist die spritzgegossene Dichtung 14 und es sind andere, bereits bezeichnete, für die Erfindung nicht weiter bedeutsame Funktionselemente des Kolbens 6 dargestellt.

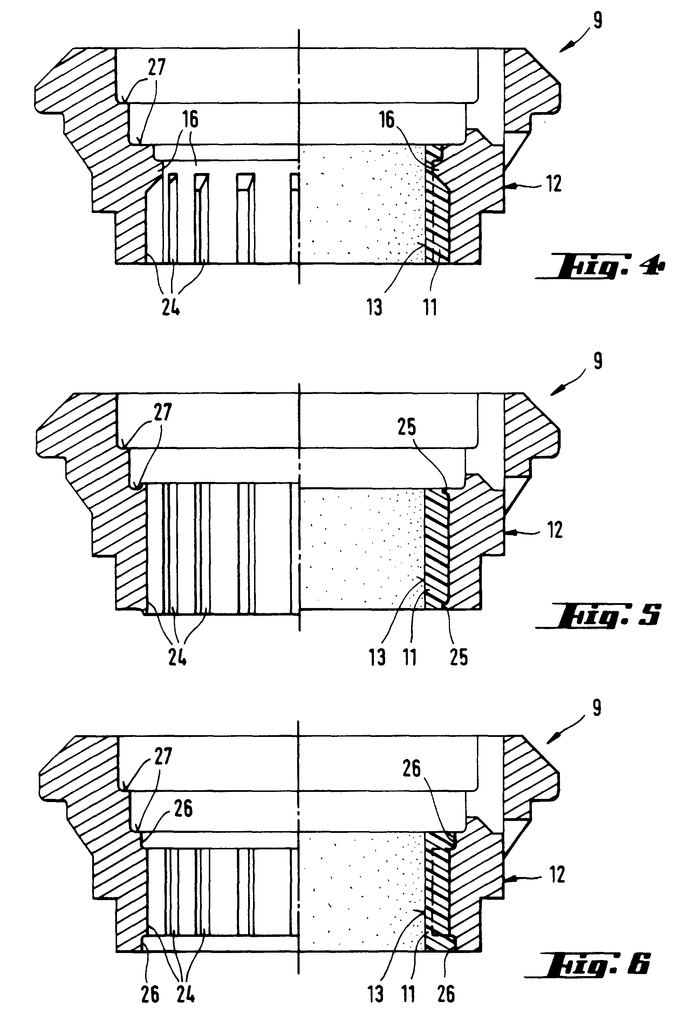

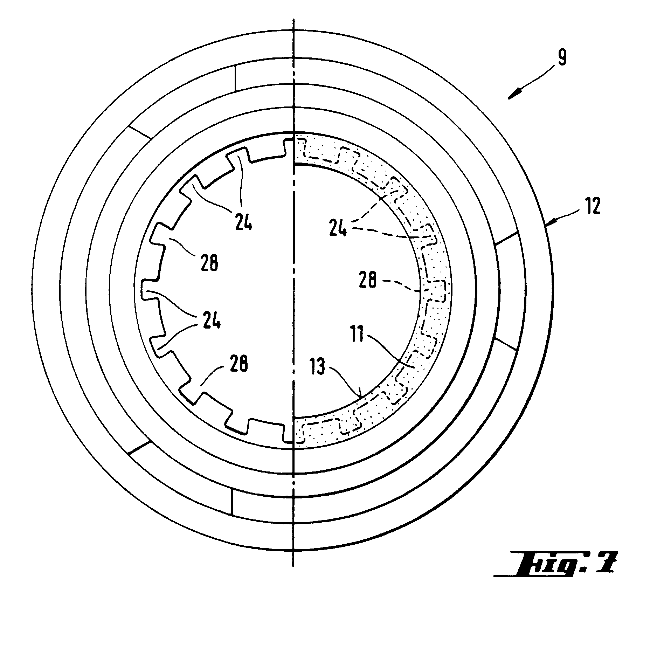

In den linken Hälften der Figuren 4, 5 und 6, die für das Spritzgießen vorbereitete Sintermetallgrundkörper 12 für Kolbenstangenführungen 9 darstellen, sind allein sintermetallurgisch hergestellte Halte- und Verankerungshilfen für den spritzgegossenen Führungsbelag 11 (rechte Figurenhälfte) wiedergegeben. Alle drei Figuren zeigen vertikale Nuten 24, deren vordere Öffnungen, wie in Fig.7 besser zu sehen ist, schmäler als der dahinterliegende Raum sind. Diese Formgebung dient dazu, der eingespritzten Polymermasse besseren Halt zu geben. In Fig. 4 ist zusätzlich ein umlaufender Steg 16 vorhanden, der mit der füllerhaltigen Polymermasse um- und überspritzt wird. In Fig. 5 hat der innere Bereich des Sintermetallgrundkörpers 12, auf dessen innere Mantelfläche die füllerhaltige Polymermasse spritzgegossen wird, oben und unten zunächst eine größere Höhe. Dieser Bereich wird beim Kalibrieren des Grundkörpers 12 auf das erforderliche Endmaß gepreßt und dabei werden oben und unten ringförmig nach innen ragende Krägen 25 gebildet, die den spritzgegossenen Belag 11 der Kolbenstangenführung 9 abstützen und halten. In den Sintermetallgrundkörper nach Fig. 6 sind als Verankerungshilfe für den spritzgegossenen Belag 11 der Kolbenstangenführung 9 oben und unten ringförmig umlaufende Absätze oder Endnuten 26 preßgesintert. Die in allen 3 Figuren sichtbaren Ringabsätze 27 dienen zur Aufnahme und Halterung der oberhalb (hier dargestellt) oder unterhalb (nicht wiedergegeben) anzubringenden Dichtung (siehe 10 in Fig. 1).

In Fig. 7, die eine Kolbenstangenführung 9 in einer Ansicht auf die untere Flachseite zeigt, sind die die Verankerung verbessernden Nuten 24, deren Öffnungen 28 enger sind als die dahinterliegende Weite dieser Nuten 24, und es ist im rechten Teil der Ansicht ein auf die im Sintermetallgrundkörper 12 der Kolbenstangenführung 9 befindliche, mit Längsnuten 24 strukturierte Oberfläche spritzgegossener füllerhaltiger Polymerbelag 11 zu sehen.

## Patentansprüche

1. Sintermetallformkörper für Stoßdämpfer (1), nämlich eine Kolbenstangenführung (9) und ein auf einer längsaxial beweglichen Kolbenstange (5) fest montierbarer, in einem Zylinderrohr (2) bewegbarer und gegen die Wand des Zylinderrohres (2) abgedichteter Kolben (6), die an ihren, die Führungs- und Dichtfunktionen bewirkenden Zonen mit Führungs-, Dicht- und Gleitelementen (11, 14) in Form von aus organischen Polymeren bestehenden oder organische Polymere enthaltenden Belägen (11, 14) ausgerüstet sind, dadurch gekennzeichnet, daß wenigstens die Führungs- und Dichtfunktionen bewirkenden Zonen der Kolbenstangenführung (9) und des Stoßdämpferkolbens (6) mit Erhebungen (16, 25) und Vertiefungen (18, 24, 26) versehen und mit einem dichtenden, führenden und gleitenden Belag (11, 14) aus einem organischen Polymer umspritzt sind, wobei der Belag (11, 14) formschlüssig fest in der Zone verankert ist und das organische Polymer ein einen Gleiteigenschaften verleihenden mineralischen Füller enthaltender Thermoplast oder Duroplast ist.

2. Sintermetallformkörper für Stoßdämpfer (1) nach Patentanspruch 1,
dadurch gekennzeichnet, daß
die spritzgegossenen Beläge (11, 14) der Kolbenstangenführung (9) und des Stoßdämpferkolbens (6) einen fluorhaltigen Thermoplasten aus der Gruppe
- Copolymeres von Tetrafluorethylen mit Perfluoralkylvinylether (PFA),
- Copolymeres von Tetrafluorethylen mit perfluoriertem Propylen und Perfluoralkylvinylether (EPE),
- Copolymeres von Tetrafluorethylen mit Perfluorpropylen (FEP),
- Copolymeres von Tetrafluorethylen mit Ethylen (ETFE),
- Polychlortrifluorethylen (PCTFE),
- Copolymeres von Ethylen und Chlortrifluorethylen (ECTFE)
enthalten.

3. Sintermetallformkörper für Stoßdämpfer (1) nach Patentanspruch 1,
dadurch gekennzeichnet, daß
die spritzgegossenen Beläge (11, 14) der Kolbenstangenführung (9) und des Stoßdämpferkolbens (6) einen Thermoplasten aus der Gruppe
- Polyaryletherketone (PEK),
- Polyaryletheretherketone (PEEK),
- Polyphenylensulfid (PPS),
- Polyarylensulfone (PSU),
- Polyethersulfone (PES),
- Poly(amid-imid) (PAI),
- Poly(ether-imid) (PEI),
- Poly(imid-sulfon) (PISO)
enthalten.

4. Sintermetallformkörper für Stoßdämpfer (1) nach Patentanspruch 1,
dadurch gekennzeichnet, daß
die spritzgegossenen Beläge (11, 14) der Kolbenstangenführung (9) und des Stoßdämpferkolbens (6) einen Duroplasten auf Phenolharzbasis enthalten.

5. Sintermetallformkörper für Stoßdämpfer (1) nach einem der Patentansprüche 1 bis 4,
dadurch gekennzeichnet, daß
die organischen Polymere einen Gehalt eines Gleiteigenschaften verleihenden Füllers von 5 bis 65 Volumenprozent aufweisen.

6. Sintermetallformkörper für Stoßdämpfer (1) nach Patentanspruch 5,
dadurch gekennzeichnet, daß
der mineralische, Gleiteigenschaften aufweisende Füller Graphit oder Molybdändisulfid ist.

7. Sintermetallformkörper für Stoßdämpfer (1) nach einem der Patentansprüche 1 bis 6,
dadurch gekennzeichnet, daß
die für das Spritzgießen vorgesehenen Grundkörper (12, 15) der Stoßdämpferkolben (6) und der Kolbenstangenführungen (9) an den für die Anbringung der füllerhaltigen Polymermasse vorgesehenen Zonen die Verankerung der füllerhaltigen Polymermasse verbessernde Erhebungen (16, 25) und Vertiefungen (18, 24, 26) hat.

## Claims

1. A sintered metal moulding for shock absorbers (1), namely a piston rod guide (9) and a piston ((6) which may be mounted fixedly on a piston rod (5) movable in the direction of the longitudinal axis, may be moved in a cylindrical tube (2) and is sealed with respect to the wall of the cylindrical, tube (2), said piston rod guide (9) and said piston (6) being provided, at their zones carrying out the guiding and sealing functions, with guiding, sealing and sliding elements (11, 14) in the form of coatings (11, 14) consisting of organic polymers or containing organic polymers, characterised in that at least the zones of the piston rod guide (9) and the shock-absorber piston (6) carrying out the guiding and sealing functions are provided with raised areas (16, 25) and recessed areas (18, 24, 26) and are encapsulated by injection molding in a sealing, guiding and sliding coating (11, 14) of an organic polymer, wherein the coating (11, 14) is anchored firmly and conformedly in the zone and the organic polymer is a thermoplastic or thermosetting plastic containing a mineral filler providing surface slip characteristics.

2. A sintered metal moulding for shock absorbers (1) according to claim 1, characterised in that the injection-moulded coatings (11, 14) of the piston rod guide (9) and the shock-absorber piston (6) contain a fluorine-containing thermoplastic from the group comprising
- copolymers of tetrafluoroethylene with perfluoroalkylvinyl ether (PPA),
- copolymers of tetrafluoroethylene with perfluorinated propylene and perfluoroalkylvinyl ether (EPE),
- copolymers of tetrafluoroethylene with perfluoropropylene (FEP),
- copolymers of tetrafluoroethylene with ethylene (ETFE),
- polychlorotrifluoroethylene (PCTFE),
- copolymers of ethylene and chlorotrifluoroethylene (ECTFE).

3. A sintered metal moulding for shock absorbers (1) according to claim 1, characterised in that the injection-moulded coatings (11, 14) of the piston rod guide (9) and the shock-absorber piston (6) contain a thermoplastic from the group comprising
- polyaryl ether ketone (PEK),
- polyaryl ether ether ketone (PEEK),
- polyphenylene sulphide (PPS),
- polyarylene sulphone (PSU).
- polyether sulphone (PES),
- poly(amide imide) (PAI),
- poly(ether imide) (FEI),
- poly(imide sulphone) (PISO).

4. A sintered metal moulding for shock absorbers (1) according to claim 1, characterised in that the injection-moulded coatings (11, 14) of the piston rod guide (9) and the shock-absorber piston (6) contain a phenolic resin-based thermosetting plastic.

5. A sintered metal moulding for shock absorbers (1) according to any one of claims 1 to 4, characterised in that the filler providing surface slip characteristics is present in the organic polymers in an amount of from 5 to 65 percent by volume.

6. A sintered metal moulding for shock absorbers (1) according to claim 5, characterised in that the mineral filler exhibiting surface slip characteristics is graphite or molybdenum disulphide.

7. A sintered metal moulding for shock-absorbers (1) according to any one of claims 1 to 6, characterised in that the basic elements (12, 15), provided for injection moulding, of the shock-absorber pistons (6) and the piston rod guides (9) have raised areas (16, 25) and recessed areas (18, 24, 26) improving anchorage of the filler-containing polymer composition at the zones provided for application of the filler-containing polymer composition.

## Revendications

1. Pièces de forme en métal fritté pour des amortisseurs de chocs (1), à savoir un guide de tige de piston (9) et un piston (6) pouvant être monté de manière fixe sur une tige de piston (5) mobile dans le sens de son axe longitudinal, pouvant se déplacer dans un tube cylindrique (2) et étanche par rapport à la paroi du tube cylindrique (2), qui sont munies dans leurs zones assurant les fonctions de guidage et d'étanchéité d'éléments de guidage, d'étanchéité et de glissement (11, 14) sous la forme de garnitures (11, 14) faites de polymères organiques ou contenant des polymères organiques, caractérisées en ce que au moins les zones du guide de tige de piston (9) et du piston d'amortisseur de chocs (6) qui assurent les fonctions de guidage et d'étanchéité sont munies de saillies (16, 25) et de creux (18, 24, 26) et sont surmoulées avec une garniture d'étanchéité, de guidage et de glissement (11, 14) faite d'un polymère organique, la garniture (11, 14) étant ancrée à demeure dans la zone selon un engagement positif et le polymère organique étant un thermoplastique ou un thermodurcissable contenant une matière de charge minérale qui confère des propriétés de glissement.

2. Pièces de forme en métal fritté pour amortisseurs de chocs (1) selon la revendication 1, caractérisées en ce que les garnitures (11, 14) moulées par injection du guide de tige de piston (9) et du piston d'amortisseur de chocs (6) contiennent un thermoplastique fluoré choisi dans le groupe comprenant les composés suivants :
- copolymères de tétrafluoréthylène et de perfluoroalkylvinyléther (PFA) ;
- copolymères de tétrafluoréthylène et de propylène perfluoré et perfluoroalkylvinyléther (EPE) ;
- copolymères de tétrafluoréthylène et de propylène perfluoré (FEP) ;
- copolymères de tétrafluoréthylène et d'éthylène (ETFE) ;
- polychlorotrifluoréthylène (PCTFE) ;
- copolymères d'éthylène et de chlorotrifluoréthylène (ECTFE).

3. Pièces de forme en métal fritté pour amortisseurs de chocs (1) selon la revendication 1, caractérisées en ce que les garnitures (11, 14) moulées par injection du guide de tige de piston (9) et du piston d'amortisseur de chocs (6) contiennent un thermoplastique choisi dans le groupe comprenant les composés suivants :
- polyaryléthercétones (PEK),
- polyarylétheréthercétones (PEEK),
- sulfure de polyphénylène (PPS),
- polyarylène sulfone (PSU),
- polyéther sulfone (PSU),
- polyamide imide (PAI),
- polyétherimide (PEI),
- polyimide sulfone (PISO)

4. Pièces de forme en métal fritté pour amortisseurs de chocs (1) selon la revendication 1, caractérisées en ce que les garnitures (11, 14) moulées par injection du guide de tige de piston (9) et du piston d'amortisseur de chocs (6) contiennent un thermodurcissable à base de résine phénolique.

5. Pièces de forme en métal fritté pour amortisseurs de chocs (1) selon l'une des revendications 1 à 4, caractérisées en ce que les polymères organiques présentent une teneur de 5 à 65 % en volume d'une matière de charge conférant des propriétés de glissement.

6. Pièces de forme en métal fritté pour amortisseurs de chocs (1) selon la revendication 5, caractérisées en ce que la matière de charge minérale présentant des propriétés de glissement est le graphite ou le bisulfure de molybdène.

7. Pièces de forme en métal fritté pour amortisseurs de chocs (1) selon l'une des revendications 1 à 6, caractérisées en ce que les corps de base (12, 15) des pistons d'amortisseur de chocs (6) et des guides de tige de piston (9) prévus pour le moulage par injection possèdent, dans les zones prévues pour l'application de la masse polymère contenant une matière de charge, des saillies (16, 25) et des creux (18, 24, 26) qui améliorent l'ancrage de la masse polymère contenant une matière de charge.
